Europäisches Patentamt

European Patent Office

Office européen des brevets

(11) Publication number: **0 003 255**
A1

# EUROPEAN PATENT APPLICATION

(21) Application number: 78300764.4

(22) Date of filing: 07.12.78

(51) Int. Cl.²: **F 23 R 1/12**
F 02 C 5/00, F 01 K 21/04

(30) Priority: 07.12.77 CA 292612

(43) Date of publication of application:
08.08.79 Bulletin 79/16

(84) Designated contracting states:
CH DE FR GB IT SE

(71) Applicant: Wanat, Ignacy
P.O.V, Box 47 25 Ritchie Avenue
Toronto Ontario, M5P 3B8(CA)

(72) Inventor: Wanat, Ignacy
P.O.V, Box 47 25 Ritchie Avenue
Toronto Ontario, M5P 3B8(CA)

(74) Representative: Boutland, John Anthony et al,
8, Heatherstone Avenue
Hythe Southampton SO4 5LQ(GB)

(54) Internal combustion elastic fluid generator and turbine motor combination, method for generating the elastic fluid.

(57) A generator (10) for elastic fluids, particularly steam, suitable for use with a steam turbine (40) comprises a rotor (16) having a number of chambers (25) distributed around the surface thereof. As the rotor (16) is rotated the chambers (25) are charged with a combustible mixture such as hydrogen (passage 27) and oxygen (passage 26) or lpg. and air, for example. Water is injected into the chambers (passage 28) and the mixture ignited, (igniter 30), so as to vaporize the water at least partially within the combustion chambers. The mixture of steam and combustion gases may be connected directly to the input of the turbine (40). The unit is characterized by its compact size and responsiveness to demand even on start up from cold.

FIG.2.

Croydon Printing Company Ltd.

-1-

INTERNAL COMBUSTION ELASTIC FLUID GENERATOR &
TURBINE MOTOR COMBINATION

This invention relates to apparatus and method for the generation of elastic fluids. It further relates to novel turbine engine combinations employing such apparatus.

The prior art practise in relation to the generation of elastic fluids such as may be used in conjunction with steam turbines, for example, appears to be limited to the use of external combustion methods, when using combustible fuels as a source of energy. In order to operate external combustion elastic fluid generators at reasonable thermal efficiencies it is necessary to provide relatively large heat exchange surfaces, and particularly where starting from cold or where there is an intermittent or varying demand, the time lag between demand and supply can be considerable.

I have found that elastic fluids may be generated quickly and efficiently by an internal combustion method. In my method a mixture of combustible substances is mixed with a fluid, typically water, in a rotating chamber, and the mixture is combusted so as to raise the temperature in the chamber and generate steam in situ.

My invention comprehends an apparatus for effecting the internal combustion which comprises a stator and a rotor mounted from the stator for rotary movement with respect thereto. The rotor is provided with means which, together with the peripheral surface of the stator contiguous with the rotor, define a plurality of chambers distributed around the rotor. Inlet means is provided for permitting the supply of a fluid combustible mixture into the chambers, and also the supply of a suitable noncombustible fluid thereto, typically water. Outlet means is further provided for releasing the mixture of combusted products and vaporized non-combustible fluid subsequent to the combustion. Additionally ignition means is provided for igniting the combustible fluid mixture, the ignition means being located intermediate the inlet and outlet means.

Generally the stator will be a housing for the rotor, with the rotor concentrically mounted within the stator. Preferably the chambers are formed as grooves in the peripheral surface of a cylindrical rotor. In a preferred embodiment, groups of chambers are separated by axially aligned wiper bars let into the surface of the rotor, the bars sealing upon the inner surface of the stator so as to reduce leakage of elastic fluid from the chambers in the combustion area.

My invention also comprehends the combination of the combustor with a turbine, where the outlet of the combustor is directly connected to the inlet of the turbine, for example. The combination is particularly suited to relatively small units wherein the turbine may be a single stage impulse turbine for example. In such embodiment the housing of the turbine and the combustor may be in greater part unipartitely formed, and thereby provide a unit with desirable power to weight ratio.

Hydrogen and oxygen are particularly preferred in forming the combustible fluid mixture where the non-combustible fluid is water, as they will combust to form water; the effluent from the turbine, where this is used in conjunction with my combustor, may be recycled into the combustor without any undesirable formation of acidic products. In principle any fluid fuel may be employed together with oxygen per se or a source thereof, such as air, for example. Thus hydrocarbons, particularly gases such as lpg. or liquid fractions such as gasoline will generally be suitable. It is also contemplated that chemical systems other than those depending upon an oxidative combustion may provide a suitable heat source for the generation of elastic fluids.

As a non-combustible fluid for use in my combustion water will predominately be preferred, although other inert or relatively inert materials may under certain circumstances be preferred. The water may be water per se, or water in the form of steam or mixtures thereof. Thus, depending upon the relative concentrations of combustible and non-combustible fluids admitted into the chambers of my combustor, and their heat contents, my combustor may be used as a superheater or a wet steam generator as desired.

These aspects of my invention, together with further aspects and advantages such as may be explained or may be apparent to persons skilled in the art, will be more clear from a consideration of a preferred embodiment of my invention which is shown in the accompanying illustrations. In these illustrations

Figure 1  is a plan view of my combustor in combination with a turbine;

Figure 2  is a view along section line 2-2 of Figure 1;

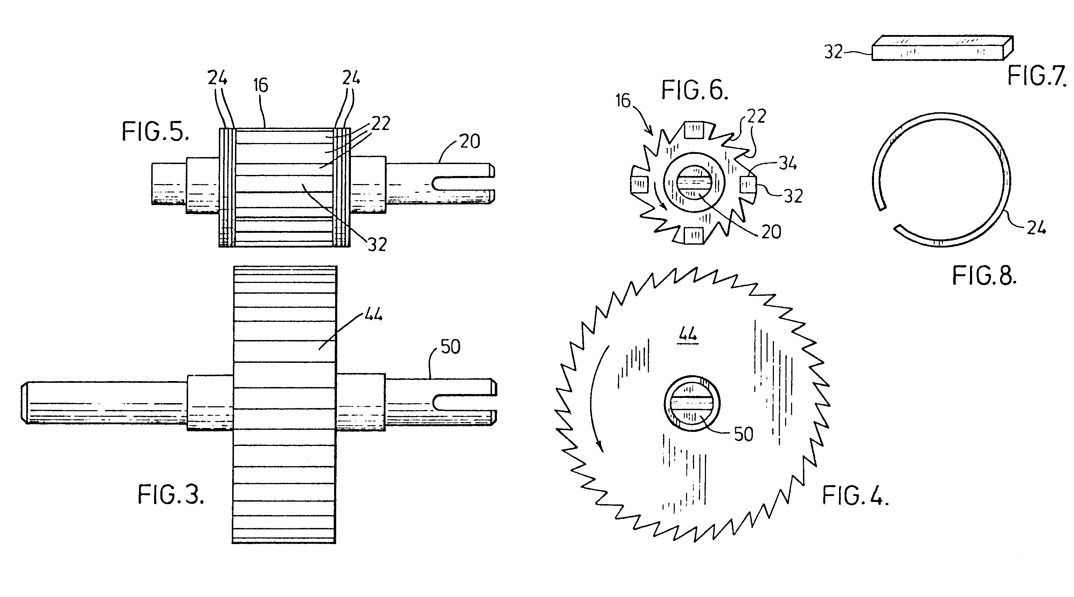

Figure 3  is a plan view of the rotor of the turbine in Figure 1;

Figure 4  is a side elevation of the rotor of Figure 3 ;

Figure 5  is a plan view of the rotor of the combustor of Figure 1;

Figure 6  is a side elevation of the rotor of Figure 5 ;

Figure 7  is an isometric view of an axial sealing bar forming part of the rotor of Figure 5;

Figure 8  is an elevation of a lateral sealing ring forming part of the rotor of Figure 5 .

Referring to the figures in detail, my combustor is identified therein generally by the numeral 10 and a turbine in tandem therewith by the numeral 40.  Combustor 10 comprises a stator housing 12 having a cylindric bore opening 14 therein. A cylindrical rotor 16 is mounted from housing 12 by journals 18 to be concentric with bore opening 14. A shaft 20 projects from one side of the rotor 16 to beyond the confines of housing 12. Rotor 16 is provided with a number of axially elongated grooves 22 in its peripheral surface, these grooves being sealed at each end thereof by rings 24. Rotor 16 is a moderately close tolerance fit within bore 14, so as to form with the wall of the bore a plurality of discrete chambers 25. It appears to be preferable for sealing purposes that the trailing wall of each groove has a greater radial dimension than the leading wall thereof, although other groove profiles are not precluded and may under some circumstances be preferred.

A plurality of passage openings 26, 27 and 28 are formed in the wall of housing 12 to form inlets to chambers 25, and a further opening 29 forms an outlet therefrom. An igniter such as a glow plug cr spark/plug projects through the wall of housing 12 into bore 14 intermediate passage opening 26 and outlet opening 29. Passage openings 26, 27 and 28 together form means for introducing water and a combustible fluid mixture into chambers 25. Whilst a single passage opening could be employed, it is preferred for general ease of control to introduce the water and the materials forming the fluid mixture separately into the chambers 25. It is preferred to introduce the water supply to rotor 16 in moderate proximity to outlet opening 29 to provide the maximum residence time for the water. As previously observed, the water may be in the form of water per se, or steam which may be wet or dry, depending upon whether it is desired to employ the combustor 10 primarily as a superheater or as a wet or dry steam generator, the ratio of combustible to non-combustible components charged to chambers 25 being suitably selected for the desired purpose. In each instance the enthalpy of the non-combustible fluid will be increased.

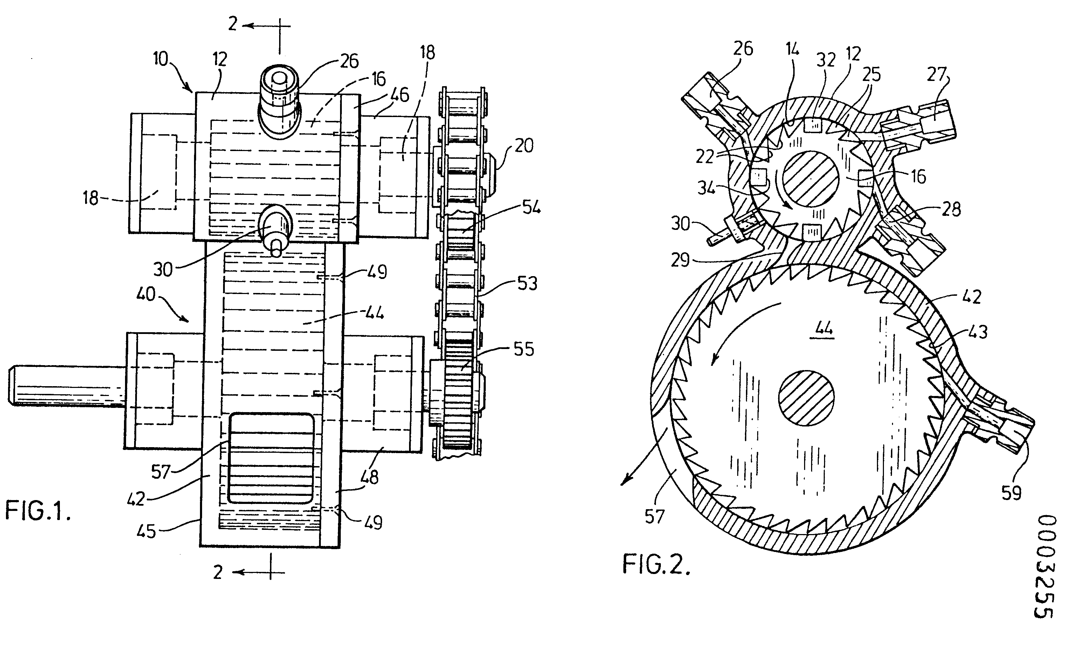

Assuming rotor 16 to be rotating in an anticlockwise direction as shown in Figure 2 by the arrow, one operating cycle of combustor 10 may be considered to commence with the metering into a chamber 25 of a suitable quantity of water through passage 28. As the rotor 16 rotates, the chamber will be successively charged with metered quantities of materials to form a combustive mixture. Typically and preferably, hydrogen is admitted through passage 27, and oxygen and air through passage 26. Further rotation of rotor 16 them moves the charged chamber opposite igniter 30, where the combustible mixture is combusted so as to raise the temperature in chamber 25 and increase the enthalpy of the non-combustible fluid. The combusted contents of chamber 24 are then discharged through outlet 29 as the chamber rotates to a position opposite the outlet. The angular relationship between the combustion zone opposite igniter 30 and outlet 29 will be selected according to the nature of the fluid fuel to be combusted, and particularly its flame speed in relation to the residence time in chamber 25 so as to ensure reasonably complete combustion prior to exhaust through outlet 29.

It will be appreciated that in this preferred embodiment chambers 25 rotate with constant volume. I do not preclude arrangements such as where rotor 16 is eccentrically mounted and provided with sliding vanes so as to vary the chamber volume as the rotor rotates, but these appear to be neither necessary nor desirable. The pressure within a chamber 25 may well be slightly negative at the beginning of an operating cycle where water per se is charged through inlet opening 28. However, the steady state operating temperature of rotor 16 may suitably be some 300-400$^{o}$C, hence the water is quickly transformed, at least partially, into an elastic state, and a positive pressure generated in chamber 25. In the angular zone between the igniter 30 and outlet opening 29 pressures within chamber 25 may be some 50kg/cm$^2$ or more. In order to reduce leakage of pressure between chambers 25, I provide rotor 16 with wiper bars 32 situated at intervals around the rotor. Thus elongated axial slots 34 are formed in rotor 16 between every three chambers, the wiper bars 32 being radially moveable in the slots. The wiper bars 32 may be spring loaded outwardly, although this is generally not necessary as centrifugal pressure normally ensures good contact between the bars and the wall of bore 14.

The outlet 29 of combustor 10 is positioned so as to form the inlet of turbine 40. Turbine 40 is a single stage impulse type, and comprises a housing 42 having a bore 43 with a rotor 44 journalled therein, with an output shaft 50 projecting beyound the confines of housing 42. The housing 12 of combustor 10 and housing 42 are formed in major part unipartitely. with wall portions common to the combustor and the turbine so as to give a compact and relatively light weight unit with reduced thermal losses. The housing may be formed from three parts , as best seen in Figure 1 , comprising a major body portion 45 wherein the bores 14 and 43 are formed integrally with the left hand bearing supports, and integral end cap and right hand bearing supports 46, 48 for the combustor and turbine respectively, these securing to the major body portion with machine screws 49.

In the illustrated form of rotor 16 wherein the combustion chambers 25 have constant volume it is necessary to provide energy from an external source to rotate the rotor. For this purpose I couple the output shaft 50 to shaft 20 of rotor 16 using a chain 53 and sprockets 54,55. In general, the diameter of rotor 16 may be significantly less than that of rotor 44, ratios commonly being in the range of about $\frac{1}{2}$ to $\frac{1}{5}$. Sprockets 54,55 are chosen so as to rotate rotor 16 at approximately 15 to 20% of the linear peripheral speed of that of turbine rotor 44, although a wide range of latitude is possible, depending upon the desired operating characteristics of the combination.

Housing 42 is provided with an exhaust opening 57 for permitting the exhaust of steam from turbine 40. The exhaust steam may be recycled to opening 28, where it is of suitable quality, or of course it may be employed as a feed for a second turbine stage should this be desired. Provision for the introduction of cooling water is also made in housing 42 through inlet opening 59.

Whilst the embodiment of my invention wherein the turbine combination has been described has been limited to a simple, one stage impulse turbine, it will be apparent that the invention in its broadest sense is not limited thereto, and almost any engine driven by an elastic fluid may be used in conjunction with my combustor. The scope of my invention is not limited to illustrated embodiment thereof, but rather according to the spirit of the accompanying claims.

- 1 -    0003255

I claim

1; A combustor device for the in situ generation of elastic fluid comprising:

a stator,

a rotor mounted from said stator for rotary movement with respect thereto;

means associated with said rotor which, together with said stator, define a plurality of rotatable chambers;

first inlet means for supplying a combustible fluid mixture to said chambers;

second inlet means for supplying a non-combustible fluid to said chambers;

ignition means for igniting and combusting said combustible said fluid mixture in said chambers to increase the enthalpy of said non-combustible fluid and to at least partially change any said non-combustible fluid from an inelastic to an elastic state,

and outlet means for exhausting said combusted fluid and said non-combustible fluid from said chambers.

2) The combustor of claim 1 wherein said stator comprises a housing for said rotor.

3) The combustor of claim 2 wherein said rotor is concentrically mounted from said stator.

4) The combustor of claim 3 wherein said rotor is cylindrical, and wherein said means associated with said rotor comprises a plurality of axially elongated grooves formed in the peripheral surface of said cylinder.

5) The combustor of Claim 4 wherein a plurality of

0003255

axially elongated slots are formed in the peripheral surface of said cylinder, each said slot being provided with a radially movable bar insert.

6) The combustor of claim 1,2 or 3 wherein said second inlet means is situated intermediate said outlet means and said first inlet means.

7) The combustor of claim 1,2, or 3 wherein shaft means is connected to said rotor for providing rotary movement thereto.

8) The combustor of claim 4 or 5 wherein the trailing radial wall defining each said groove has a greater radial dimension than the leading wall thereof.

9) The combustor of claim 1,2 or 3 wherein said outlet is connected to the inlet of a turbine.

10) The combustor of claim 3,4 or 5 wherein said outlet is connected to the inlet of an impulse turbine.

11) The combustor of claim 1, 2 or 3 wherein said outlet is connected to the inlet of a turbine, and wherein means is provided for transmitting rotary power from said turbine to said rotor.

12) The combustor of claim 1,2 or 3 wherein said outlet is connected to the inlet of a single stage impulse turbine, and wherein means is provided for transmitting rotary power from said turbine to said rotor whereby said rotor rotates with a linear peripheral speed in the range of about 15 to about 20% that of said turbine.

13) The combustor of claim 1,2 or 3 wherein said outlet is coupled to the inlet of a turbine, and wherein a

0003255

major portion of the housing of said combustor device is unipartitely formed with a major portion of the housing of said turbine so as to have a wall portion in common therein.

14) An engine comprising in combination a housing having a cylindrical bore opening therein, a cylindrical rotor journalled in said housing for rotary movement within said cylindrical bore opening, the axis of said cylindrical rotor and said cylindrical bore being generally coincident, a plurality of axially elongated grooves in the peripheral surface of said cylindrical rotor, surface portions of the peripheral wall of said rotor separating said grooves being in close proximity to the wall of said bore so as to form a plurality of discrete chambers, first passage means in said housing to permit the supply of a combustive fluid mixture into said chambers, means for igniting said combustive fluid mixture in said chambers, second passage means in said housing located at an angular interval after said igniting means to permit the exhaust of combusted gases from said chambers, third passage means in said housing to permit the supply of water to said chambers, said third passage means being located other than in said angular interval, said housing having a second bore opening therein, a turbine rotor journalled in said housing for rotary movement within said second bore opening, drive means connecting said turbine rotor to said cylindrical rotor.

15) In a method for generating an elastic fluid, the improvement which comprises providing providing a rotor and stator therefor, said rotor having a plurality of compartments situated around the periphery thereof, sequentially supplying to said compartments whilst rotating said rotor a source of water selected from water in an elastic state, water in the inelastic state and mixtures thereof, a combustible fluid and a source of oxygen to combust said combustible fluid, sequentially combusting said combustible fluid in said compartments to increase the enthalpy of the water and transform at least part of any water in the inelastic state to the elastic state, and exhausting the resulting combusted mixture from said compartments.

16' The method of claim 15 wherein said combustible fluid and said oxygen source are separately introduced into said compartments.

17) The method of claim 16 wherein said source of oxygen is air.

0003255

FIG.1.

FIG.2.

FIG.5.

24    16    24

22

20

32

FIG.3.

44

50

FIG.6.

16    22

34

32

20

FIG.7.

32

24

FIG.8.

44

50

FIG.4.

-2/2-

0003255

0003255

Application number

EP 78 30 0764

### EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| | US – A – 1 341 229 (FRYKMAN)<br>* Figures; page 1, line 67 to page 2, line 51 * | 1-4,7,<br>9,10,<br>13-17 |
| | FR – A – 982 656 (BOULET)<br>* Figure 19; page 3, 2nd paragraph; page 4, 2nd paragraph * | 1-4,7,<br>13-17 |
| | FR – A – 2 232 737 (KABUSHIKI...)<br>* Figures; claims; page 2, lines 6-16 * | 1-4,<br>11,12,<br>15,17 |
| | DE – A – 1 801 106 (HOHMANN)<br>* Claims 1,3; figures 5,8 * | 1-4,<br>15 |
| | DE – A – 551 378 (KERSTEN)<br>* Page 1; figures * | 1-4,7-<br>11,<br>13-15 |
| A | GB – A – 636 132 (DORMAN) | |
| A | GB – A – 1 269 123 (ROLLS-ROYCE) | |
| A | FR – A – 641 415 (LALLIER) | |
| A | US – A – 3 995 421 (KUROIWA) | |
| A | US – A – 3 101 592 (ROBERTSON) | |

**CLASSIFICATION OF THE APPLICATION (Int. Cl.²)**

F 23 R   1/12
F 02 C   5/00
F 01 K 21/04

**TECHNICAL FIELDS SEARCHED (Int.Cl.²)**

F 23 R
F 02 C
F 01 K

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 06-03-1979 | DANCER |

EPO Form 1503.1   06.78